# EUROPEAN PATENT APPLICATION

(11) **EP 1 081 974 A2**
(43) Date of publication of application: **07.03.2001**
(21) Application number: 00307174.3
(22) Date of filing: 21.08.2000
(51) Int. Cl.: H04Q 7/38

(54) **System for performing handoffs using location information for a wireless unit**

(30) Priority: 31.08.1999 US 386982
(71) Applicant: LUCENT TECHNOLOGIES INC., Murray Hill, New Jersey 07974-0636 (US)
(72) Inventor: Anderson, Carl Richard, Minato-ku (JP); Hanson, Kathryn W., Lincroft, New Jersey 07738 (US); Matusevich, Alex, Morris Plains, New Jersey 07950 (US); Rauscher, Mary Ellen, White House Station, New Jersey 08889 (US); Tobias, Jonathan Michael, Florham Park, New Jersey 07932 (US)
(74) Representative: Buckley, Christopher Simon Thirsk

(57) **Abstract**

A system for performing a handoff of a wireless unit uses location information for the wireless unit to determine whether to handoff the wireless unit and/or to which base station to handoff the wireless unit. For example, a wireless unit can have a location system, such as a global positioning system (GPS), which determines the location of the wireless unit. The wireless unit can obtain location information for the wireless unit and provide the location information to the serving base station. From the location information, the serving base station can determine that the wireless unit is leaving the coverage area of the serving base station and may need to be handed off. The serving base station then can send at least a portion of the location information to the MSC, and the MSC can determine to which base station the wireless unit is handed off to based on the location information. Alternatively, the serving base station can determine to which base station the wireless unit is to be handed off.

## Description

### BACKGROUND OF THE INVENTION

### 1. Field of The Invention

This invention relates to wireless communications and, more particularly, to a system for performing handoffs of a wireless unit between the base stations of a wireless communications system.

### 2. Description of Related Art

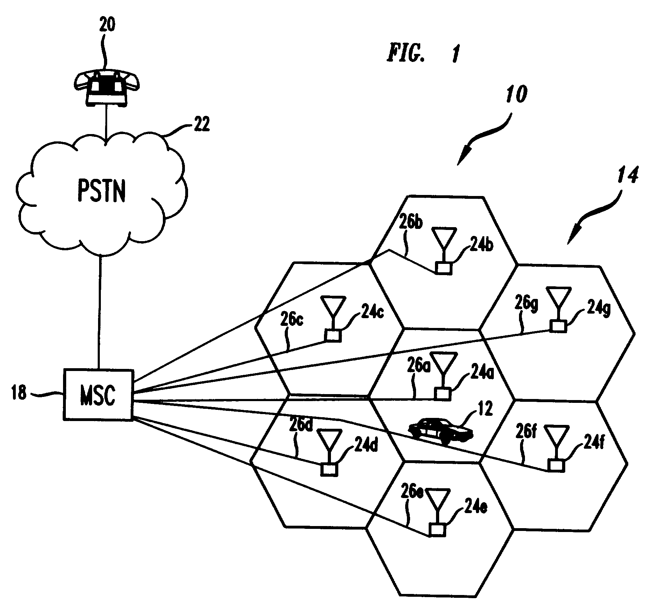

FIG. 1 depicts a schematic diagram of a wireless communications system 10 which provides wireless communications service to a wireless unit 12 that is situated within a geographic region 14. A Mobile Switching Center 18 is responsible for, among other things, establishing and maintaining calls between wireless units and calls between a wireless unit and a wireline unit (e.g., wireline unit 20). As such, the MSC interconnects the wireless units within its geographic region 14 with a public switched telephone network (PSTN) 22. The geographic area serviced by the MSC is divided into spatially distinct areas called "cells." As depicted in FIG. 1, each cell is schematically represented by one hexagon in a honeycomb pattern; in practice, however, each cell has an irregular shape that depends on the topography of the terrain surrounding the cell. Typically, each cell contains a base station (e.g. base stations 24a-g), which comprises the radios and antennas that the base station uses to communicate with the wireless units in that cell. The base stations also comprise the transmission equipment that the base station uses to communicate with the MSC 18 in the geographic area 14 via communication links 26a-g. One cell site may sometimes provide coverage for several sectors. In this specification, cells and sectors are referred to interchangeably.

In a wireless cellular communications system, a base station and a wireless unit communicate voice and/or data over a forward link and a reverse link, wherein the forward link carries communication signals over at least one forward channel from the base station to the wireless unit and the reverse link carries communication signals on at least one reverse channel from the wireless unit to the base station. There are many different schemes for determining how wireless units and base stations communicate in a cellular communications system. For example, wireless communications links between the wireless units and the base stations can be defined according to different radio protocols, including time-division multiple access (TDMA), Frequency Division Multiple Access (FDMA), code division multiple access (CDMA) and others.

Within the geographic region 14, the MSC 18 switches a call between base stations in real time as the wireless unit 12 moves between cells, referred to as a handoff. When a wireless unit is experiencing poor voice/data quality and is close to being dropped, the wireless unit is handed off to another cell site or base station that can better service the call. The decision to handoff is usually triggered by poor signal quality with the serving base station. A complex process to find a candidate cell for the wireless unit to handoff requires messages between multiple candidate cells to determine the best candidate and/or periodic sampling by the wireless unit of candidate cells.

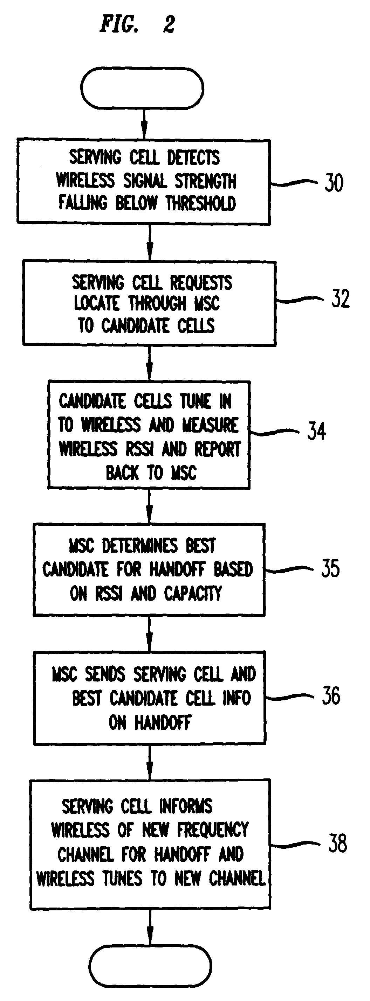

Wireless communications systems, such as AMPS and TDMA systems, use several techniques for performing a handoffs of the wireless unit between base stations. A handoff of the wireless unit 12 from a serving base station 24a can be performed using a locate. A locate requires specialized radios in the candidate cells or base stations 24b-g that tune to the carrier frequencies of the wireless units and measure the received signal quality, for example measuring received signal strength using a received signal strength indicator (RSSI) for an analog locate or using bit error rate (BER), frame error rate (FER) or RSSI for a digital locate. FIG. 2 shows a handoff using an analog locate. At block 30, the serving base station 24a detects that the signal strength of the wireless unit 12, for example using a received signal strength indicator (RSSI), is falling below a threshold value. The serving base station 24a sends an analog locate request to the candidate base stations 24b-g through the MSC 18 at block 32. In response to the analog locate request, the candidate base stations 24b-g tune to the channel(s) of the wireless unit 12, measure the signal strength, for example using an RSSI, and report the signal strength measurements back to the MSC 18 at block 34. At block 35, the MSC 18 determines the best candidate base station 24b-g for the handoff based on the signal strength measurements and capacity. Information indicating the base station and channel(s) to be handed off to is sent to the base station to be handed off to and the serving base station 24a at block 36. At block 38, the serving base station 24a informs the wireless unit of the channel(s) to be handed off to and the wireless unit tunes to the new channel(s) of the new base station. Block 30 to 38 can take at least 5 seconds. During that time, the wireless unit could lose the signal from the serving base station 24a, and the call could be lost. A digital locate assisted handoff performed in TDMA would be similar except that the threshold values would be based on received signal strength indicator (RSSI), bit error rate (BER), or frame error rate (FER).

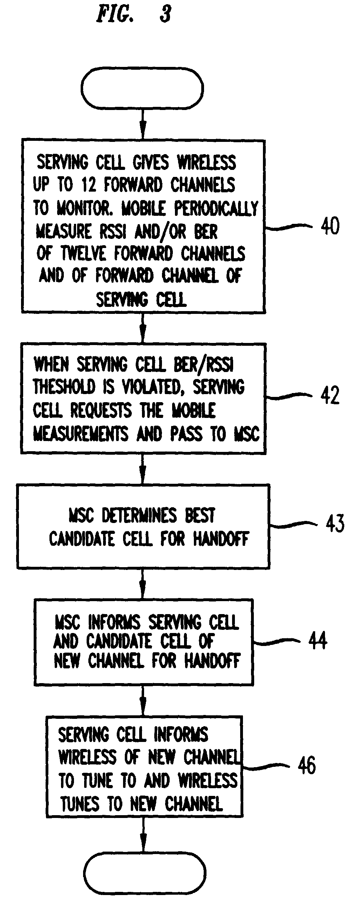

Another type of TDMA handoff is mobile assisted handoff (MAHO) shown in FIG. 3. In MAHO, the serving base station 24a informs the wireless unit 12 of up to twelve (12) forward link channels of other candidate cells (or sectors) to monitor. The wireless unit 12 periodically measures the RSSI and/or the BER of the twelve forward channels and of the forward channel of the serving base station 24a as shown in block 40. At block 42, when the serving base station 24a determines that the forward link channel violates BER and/or RSSI threshold(s), the serving base station 24a requests the BER and/or RSSI measurements for the twelve forward link channels and passes those measurements to the MSC 18. At block 43, the MSC determines the best candidate cell for handoff, and at block 44, the MSC 18 informs the serving base station 24a and the base station being handed off to of the channel(s) for the handoff. At block 46, the serving base station 24a informs the wireless unit 12 of the new channel(s) to tune to and the wireless unit tunes to the new radio channel(s). The MAHO process also takes seconds to perform and is subject to fades and interference that could result in a lost call.

These methods are prone to lost calls and require processing power, wireless resources and additional cell equipment. The lost calls result when wireless units fall into deep fades due to obstructions between the cell site antenna and the wireless unit, co-channel interference and adjacent channel interference from other cell sites and wireless units. During these periods, a call could be dropped because communications between the cell site and the wireless unit is disrupted and handoff information between the cell site and the wireless unit is lost. Thus, a need exists for an improved handoff system.

### SUMMARY OF THE INVENTION

The present invention involves a system for performing a handoff of a wireless unit using location information for the wireless unit to determine whether to handoff the wireless unit and/or to which base station to handoff the wireless unit. For example, a wireless unit can have a location system, such as a global positioning system (GPS), which determines the location of the wireless unit. The wireless unit can obtain location information for the wireless unit and provide the location information to the serving base station. From the location information, the serving base station can determine that the wireless unit is leaving the coverage area of the serving base station and may need to be handed off. The serving base station then can send at least a portion of the location information to the MSC, and the MSC can determine to which base station the wireless unit is handed off to based on the location information. Alternatively, the serving base station can determine to which base station the wireless unit is to be handed off.

### BRIEF DESCRIPTION OF THE DRAWINGS

Other aspects and advantages of the present invention may become apparent upon reading the following detailed description and upon reference to the drawings in which:
FIG. 1 shows a general diagram of a wireless communications system;
FIGs. 2 shows a flow diagram of a handoff performed by an AMPS or TDMA wireless communications system using a locate request;
FIG. 3 shows a flow diagram of a mobile assisted handoff (MAHO) performed by a TDMA wireless communications system;
FIG. 4 shows a diagram of a wireless communications system incorporating an embodiment of the handoff system according to certain principles of the present invention;
FIG. 5 shows a general block diagram of a wireless unit which can use the handoff system using location information according to certain aspects of the present invention;
FIG. 6 shows a flow diagram of an embodiment of a handoff system using location information from the wireless unit according to the principles of the present invention;
FIGs. 7A shows an example location message sent from the wireless unit to a base station(s), and 7B shows handoff location information according to the principles of the present invention; and
FIG. 8 shows an embodiment of a handoff system using location information for the wireless unit according to the principles of the present invention.

### DETAILED DESCRIPTION

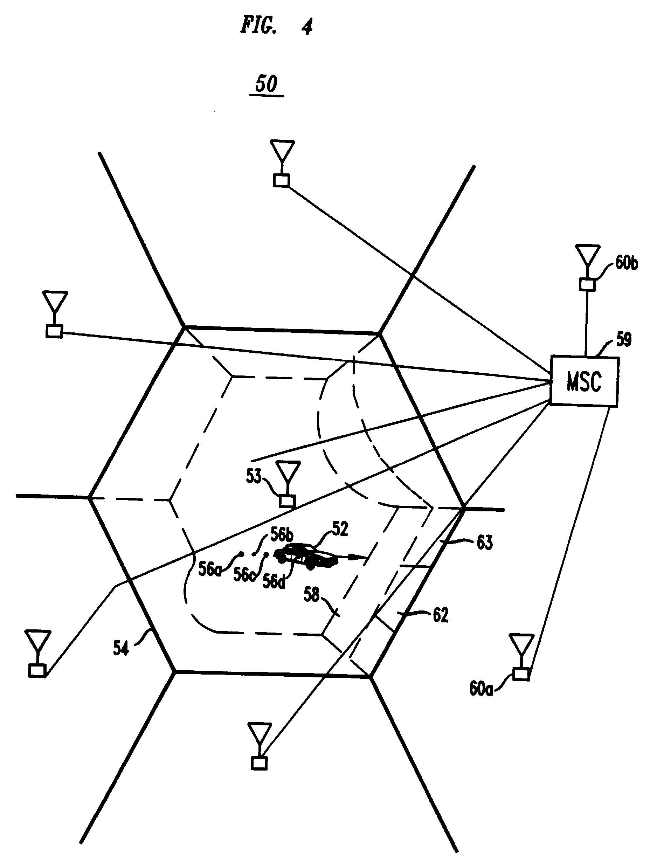

An illustrative embodiment of a system for performing handoffs using location information for the wireless unit according to the principles of the present invention is described below. FIG. 4 shows a portion of a wireless communication system 50 which incorporates the handoff system using location information of a wireless unit. For example, the handoff system obtains location information for the wireless unit 52, which includes position and can include time, speed, distance and/or direction. A location or position can be designated by latitude and longitude and include a certain tolerance, for example a radius of 50 meters. Other tolerances or ways to measure tolerances can be used, such as an area encompassing a certain latitude and longitude coordinate or a fraction(s) of a latitude and longitude coordinate depending on the location resolution. The handoff system uses the location information from the wireless unit to determine whether the wireless unit 52 needs to be handed off from a serving base station 53 and/or to determine the best candidate or candidate base stations to handoff the wireless unit 52. In this embodiment, the handoff system examines the location information relative to handoff location information for the serving cell 54. The handoff location information can include a position, plurality of positions, ranges of positions or regions within the serving cell 54 which are used as threshold or trigger values by the handoff system in determining location information and triggering a determination whether the wireless unit is to be handed off. If so, the handoff location information can be used to link or associate a best candidate base station or a limited number of candidate base stations with a position. Positions or regions within the serving cell. As such, the handoff system can use the location information for the wireless unit to determine the best candidate base station or candidate base stations to receive a handoff. A region can be defined by a plurality of positions making up the boundary of the region or several points connected by straight or curved lines. The cell could be separated into a finite set of positions and the positions grouped into different regions within the serving cell.

In the example of FIG. 4, the handoff system can obtain location information. The location information can include current and previous positions 56a-d. For each of the positions 56a-d, the location information can include time, speed, distance and/or direction for the wireless unit along with additional information corresponding to or associated with the position, such as signal quality measurements of a forward channel(s) from the serving base station, signal quality measurements of a forward channel(s) of other base stations and/or signal quality measurements of a reverse channel from the wireless unit. Depending on the embodiment, the content of the location information and associated information can vary. For example, the associated information can be linked to other parameters or information, such as wireless unit identity, wireless unit type, signal frequency or frequencies, weather, traffic load. The information in the handoff location information can also vary and can be linked to other parameters or information corresponding to or derived from previous location information and/or the associated information. The location information and associated information can be used to update, derive or maintain additional information associated with the particular location. The information associated with location can be in the form of an average, a weighted average, a cumulative average or a function of measurements at a particular location over a particular time period and/or in association with other parameters or operating conditions, such as traffic load, wireless unit identification, time and date. The information associated with location can be used to derive, update or maintain the handoff location information.

The handoff system can use the location information to determine whether a handoff may be required for the wireless unit and to which base station to handoff. For example, the handoff system can obtain location information for the wireless unit and determine if the wireless unit 52 passes into a region 58 of the cell 54. The handoff system can determine that the wireless unit is in the region 58, and thereby may require a handoff, by comparing the location information for the wireless unit 52 with the handoff location information for the cell 54. Depending on the embodiment, the location information and associated information can be examined relative to the corresponding handoff location information to determine whether the wireless unit is to be handed off.

If the handoff system determines that a handoff may be needed, the handoff system can use the location information to determine to which base station to handoff the wireless unit. For example, the handoff system can examine the location information and (and can examine associated information) relative to the corresponding handoff location information to determine the best candidate base station for the wireless unit to hand off. For example, for the region 58, the handoff location information can include a short candidate list, for example with only base stations 60a and 60b. The handoff system can examine another parameter, value or associated information to choose the best candidate base station 60a or 60b. For example, if the direction of the wireless unit 52 is part of the location information, the location handoff information could indicate a candidate list of just the base station 60a, thereby the best candidate base station. The traffic load on the base stations 60a or 60b can be used to determine the best candidate for hand off. Alternatively, if the wireless unit 52 is in region 58, the handoff system can request a locate through an MSC 59 of the shortened candidate list based on the position of the wireless unit 52 and the handoff location information. Based on the signal quality measurements from the locate and/or the traffic load of the candidate base stations 60a and 60b and/or other parameters or information, the handoff system can select the best candidate. Additionally, if the location information indicates the mobile unit has proceeded to region 62, the handoff system can determine the best candidate base station as the base station 60a.

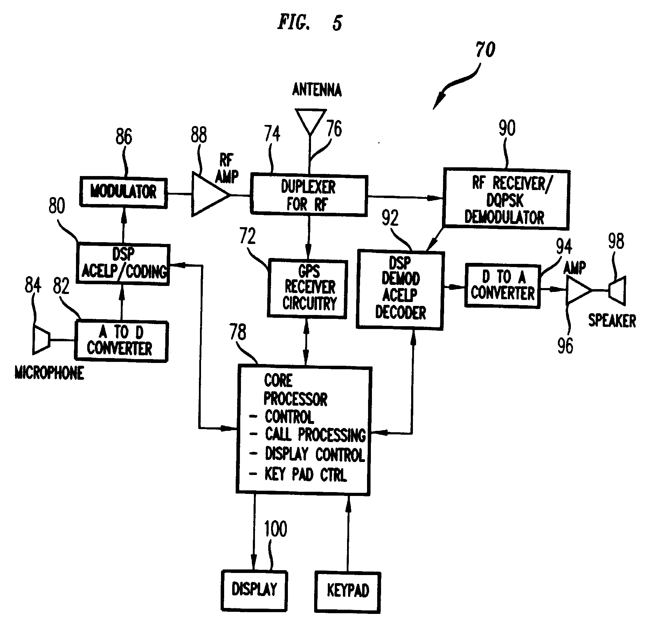

The handoff system can obtain, store, manipulate and use the location information in a variety of ways depending on the embodiment. With particular reference to FIG 5, a wireless unit 70 includes GPS receiver circuitry 72 which receives GPS signals from a duplexer 74 which is connected to the antenna 76 of the wireless unit 70. Alternatively, the GPS receiver could use its own dedicated antenna and receive circuitry. Through interaction with a GPS system of satellites and control centers as would be understood by one of skill in the art, the GPS receiver circuitry 72 provides a location information which can include time, speed, distance and/or direction for the wireless unit to the processing circuitry 78 of the wireless unit 70. The processing circuitry 78 can receive the location information in alternative ways. For example, the processing circuitry 78 can periodically or continuously monitor the location information from the GPS processing circuitry. The processing circuitry 78 can manipulate the location information into an appropriate format and store any portion of the location information in a storage or memory. For example, the location information can be stored as a position for the wireless unit, such as the latitude and longitude coordinates, in association with the time, direction and/or speed of the wireless unit at the particular position. The processing circuitry 78 can use previous location to determine information for the particular position. For example, the processing circuitry can use the times and previous position measurements to determine speed and/or direction. Location information can be stored along with signal quality measurements of channel(s) to/from the serving base station as well as signal quality measurements for channel(s) to/from other base stations. Depending on the embodiment, the storage for the wireless unit can also store handoff location information for the serving base station which the bases station provides to the wireless unit.

Depending on the embodiment, the wireless unit 70 can transmit the location information to a serving base station 53 (FIG. 4) over a channel on the reverse link. Depending on the radio protocol used to communicate with the serving base station, the forward and reverse links established between the base station and the wireless units have different structures. In North American TDMA as defined by TIA/EIA-136 ("IS-136"), the forward link is composed of a forward voice channel and a forward setup channel, and the reverse link is composed of a reverse voice channel and a reverse setup channel. The location information can be sent from the wireless unit to the serving base station over the forward voice channel, for example in a slow associated control channel (SACCH) portion of a voice frame or in a fast associated control channel (FACCH) of a voice frame. To do so, the location information or other information used by the handoff system can be provided to a signal processing/coding block which processes the location information along with the digital voice signals from an analog to digital converter (A/D) 82, for example, by performing speech coding, channel coding interleaving, encryption and/or multiplexing depending on the embodiment. The analog voice signal to be transmitted originate from a microphone 84. As would be under stood by one of skill in the art, the signals to be transmitted are provided to modulator 86 which modulates the signals, for example using differential quadrature phase shift keying (DQPSK), and converts the signals to analog radio frequencies (RF) for transmission. The radio frequency (RF) signals are amplified at amplifier 88 and transmitted using the antenna 76 after passing through the duplexer 74. The location information or other information used by the handoff system can be transmitted over the forward setup channel using the coder 80, modulator 86, amplifier 88, the duplexer 74 and the antenna 76.

For receiving location information requests, handoff location information, or other information used by the handoff system, the RF signals are received at the antenna 76 and pass through the duplexer 74 to RF receiver and demodulator 90. The RF receiver and demodulator circuitry 90 receives the RF signals and demodulates the signals, for example using DQPSK. The demodulator 90 extracts the encoded, encrypted and/or interleaved information from the signals on the reverse setup channel or in the reverse voice channel and provides the information in digital form to a decoder block 92. The processing/decoder block 92 performs any interleaving, decrypting, channel decoding, speech decoding and/or de-multiplexing of the information signals from the demodulator 90 as would be understood by one of skill in the art. The voice signals are converted from digital to analog at block 94, amplified at block 96 and output to the user at speaker 98. Data signals, such as location information requests or handoff location information from the serving base station can be provided to the processing circuitry which can act on the request or use and/or store the handoff information or other information in a storage (not shown) of the processing circuitry 78. Other data can be displayed on a display 100 or accessed by the user interfacing with a keypad 102.

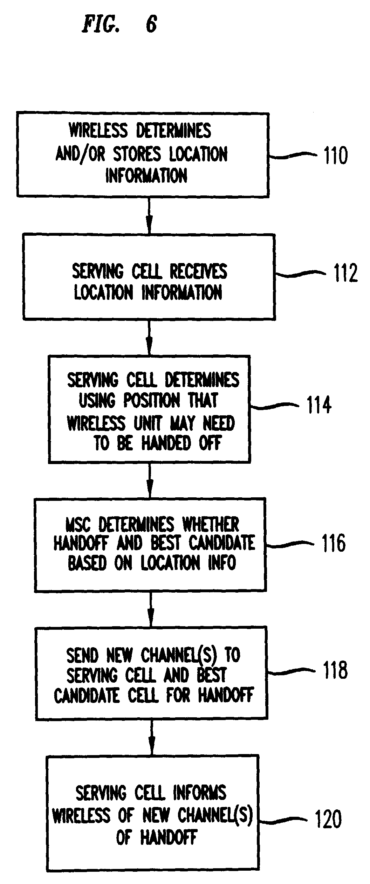

FIG. 6 shows a flow diagram of one embodiment of the handoff system according to the principles of the present invention. At block 110, the wireless unit determines and/or stores location information for the wireless unit. The wireless unit can make position measurements and determine the location information in response to a request by the serving base station for the location information. The request from the serving base station can be triggered by a signal quality measurement(s) of a reverse channel from the wireless unit that drops below a threshold value or be periodically sent by the serving base station. The serving base station can trigger a location information update of the mobile unit using other triggers and/or for other reasons, such as position changes or after the wireless unit travels a certain distance. Alternatively, the wireless unit can determine the location information continuously, based on position changes, periodically, after a certain distance is traveled, and/or if a signal quality measurement of a forward channel from the serving base station drops below a threshold value. For example, the wireless unit can determine location information for the wireless unit periodically, and based on location handoff information from the serving base station, such as location trigger positions, the wireless unit can determine location information at a higher rate, continuously or based on a different trigger or threshold value, for example a position trigger indicating that the wireless unit is in region 58 (FIG. 4). Other triggers for the wireless unit to determine location information for the wireless unit can be used, and the triggers can change and/or vary depending on the speed of the wireless unit. The most recent location information can be stored in the wireless unit along with previous location information.

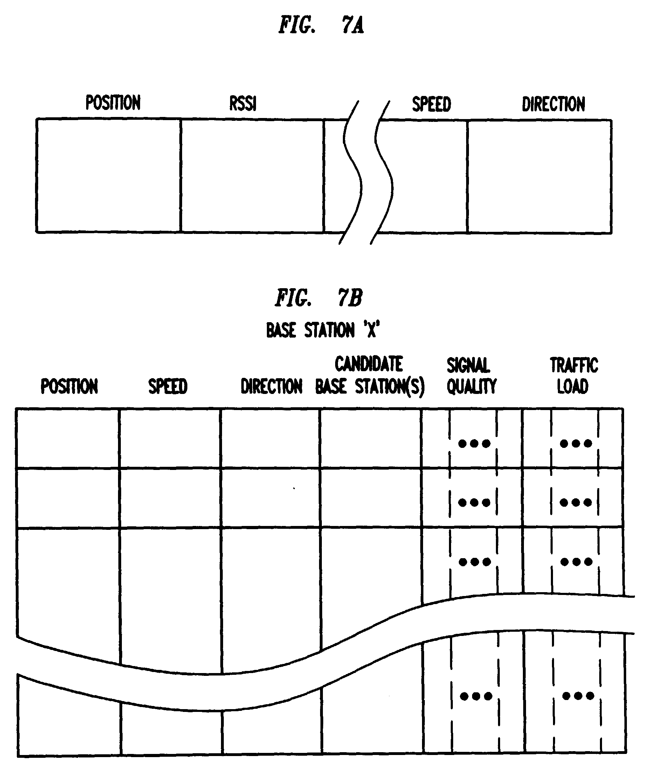

At block 112, the wireless unit transmits location information to the serving base station in response to a request by the serving base station, a time period expiring, a change in position, a signal quality measurement by the wireless unit or a trigger, such as a position trigger if the wireless unit enters region 58 and/or 59, from the serving base station being met. The trigger from the serving base station can be part of handoff location information and can include parameters, such as a time period, a distance from last position, trigger positions and/or signal quality measurement threshold(s). The request from the serving base station for location information can be triggered by a signal quality measurement(s) of a reverse channel that drops below a threshold value or be periodically sent by the serving base station. The serving base station can request the sending of location information using other triggers and/or for other reasons. The location information transmitted to the serving base station can be sent as part of a message to the serving base station on a reverse channel, for example on the reverse setup channel or in the SACCH or FACCH on the reverse voice or traffic channel. FIG. 7a shows an example of a location message sent from the wireless unit to the serving base station providing location information and signal quality measurements, such as received signal strength, of a forward channel from the serving base station. Depending on the embodiment, the location message can include associated information on a forward channel from a neighboring or candidate base station(s), and the location message is sent to the serving base station or directly to the corresponding neighboring or candidate base station. For example, the wireless unit could be monitoring twelve MAHO forward channels of candidate base station(s) and providing location information and corresponding additional information or measurements in location measurements for those channels. The transmitted location message or report can include only current position measurements and/or previous position measurements. Besides position, the location information can be provided with other location information, such as direction, speed and/or distance associated with the current position and/or previous position(s), and the location information can be sent along with associated information or parameters, such as signal quality measurements for that position and/or wireless unit identity in the form of phone number, electronic serial number or other identification code. The providing of information by location as location messages and/or used to derive handoff location information can be accomplished as described in co-pending patent application Ser. No. XX/XXX,XXX filed concurrently with the present application, assigned to the same assignee, and entitled "System for Determining Wireless Coverage Using Location Information for the Wireless Unit," herein incorporated by reference.

The transmitted location is received by the serving base station and at block 114, the serving base station can use the location information to determine whether the wireless unit may need to be handed off. The serving base station can determine whether the wireless unit may need to be handed off by using the location information and associated information relative to handoff location information for the serving base station and/or by examining signal quality measurements relative to a threshold value (in response to which the base station can request location information from the wireless unit). Alternatively, the serving base station can forward at least some of the location information to the MSC which can store and use the location information to determine whether the wireless unit needs to be handed off. Furthermore, the handoff system can determine that a handoff is likely but more location information (and associated information) for the wireless unit, such as updates on position, is required, for example if the wireless unit is in the region 63 (FIG. 4).

In FIG. 6, the serving base station uses the location information in determining that the wireless unit may need to be handed off and sends at least a portion of the location information (and can send the associated information in the location message) to the MSC. At block 116, the MSC uses the location information (and can use the additional associated information in the location message) to determine whether the wireless unit is to be handed off and a best candidate for the wireless unit to be handed off. The MSC can determine which base station to handoff to by examining a handoff location information for the serving base station. The handoff location information can include different positions or regions within the serving cell and for the different positions or regions, the corresponding best candidate or candidate base station to be handed off to for a wireless unit in the particular position. Depending on the embodiment, the handoff location information can be determined and retrieved relative to the wireless unit identity and/or other associated information, such as signal quality measurements for the position, to determine whether the particular wireless unit should be handed off and to which base station. The MSC can examine the capacity of the handoff candidates in determining which is the best candidate for the wireless unit in the particular position. Additionally, depending on the embodiment, the speed and/or direction of the wireless unit can be included in the location information and be used by the MSC in determining which is the best candidate to handoff the wireless unit at the particular position traveling at a particular speed and/or direction.

For example, FIG. 7B shows handoff location information for a serving cell 'X'. Given a position, speed, direction, associated signal quality measurement(s), such as BER, FER or RSSI, for reverse and/or forward link signals of the serving base station and/or candidate base station, and traffic load of the candidate base station(s) and/or the serving base station, the handoff system can use the handoff location information to determine whether a handoff is to be made and the corresponding best candidate base station for the handoff. Alternatively, the determination of the best candidate to handoff the wireless unit to can be performed at the serving base station and/or at the MSC. For example, the serving base station can provide the best candidate after examining the location information relative to the handoff location information for the serving cell to the MSC or provide a plurality of candidates from which the MSC chooses the best candidate, or the MSC receives all the location information from the wireless unit and makes the determination of whether to handoff the wireless unit and to which candidate base station using the location information. Furthermore, the handoff system can determine that more location information is desired to select the best candidate base station.

After the best candidate for the wireless unit is determined at block 116, the MSC sends to the best candidate base station and the serving base station at block 118 the best candidate base station information, which includes the new channel(s) to be used between the best candidate base station and the wireless unit. At block 120, the serving base station informs the wireless unit of the new channel(s) for the best candidate base station, and the wireless unit tunes to the new channels and is handed off to the best candidate base station.

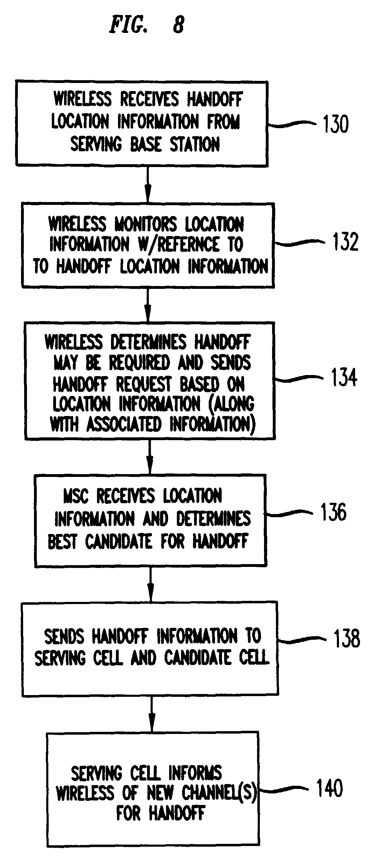

FIG. 8 shows an alternative embodiment of the handoff system using location information from the wireless unit in which the wireless unit receives handoff location information from the serving base station at block 130. The handoff location information can include a variety of parameters and/or information, such as different positions or regions within the serving cell and the corresponding best candidate or candidate base station, trigger positions for which the wireless unit should determine location information (which can be determined along with associated information) and/or send location information (which can be sent along with associated information) to the serving base station, and/or signal quality measurement threshold(s). At block 132, the wireless unit determines location information, such as current position, speed and direction, and associated information or measurements, such as signal quality measurements for the position. The wireless unit can determine the location information (which can be determined along with associated information) continuously, based on position changes, periodically, after a certain distance is traveled, if signal quality measurement(s) of a channel to or from the serving base station drops below a threshold value provided by the serving base station as part of the location handoff information and/or based on position triggers which can be part of the handoff location information. For example, location information and associated information can be determined periodically, but when the wireless unit proceeds to region 58, the location information measurements can occur at a higher rate or based on other triggers. Other triggers for the wireless unit to determine location information to the serving base station can be used, and the triggers can change and/or vary depending on the speed of the wireless unit. The most recent location information (which can be stored along with associated information) can be stored in the wireless unit along with previous location information (which can be stored along with the associated information).

The wireless unit monitors the location information (and can also monitor the associated information or measurements) with reference to the handoff location information provided by the base station. In monitoring the location information (which can be monitored along with the associated information) using the handoff location information, the wireless unit determines whether the wireless unit may need to be handed off to another base station at block 134. Depending on the embodiment, if the wireless unit determines that the wireless unit may need to be handed off, the wireless unit can send a handoff request to the serving base station. The handoff request can contain the best candidate base station or the candidate base stations indicated in the handoff location information for the particular location information (and the associated information depending on the embodiment) of the wireless unit. Alternatively, the handoff location information from the serving base station could simply contain position triggers or signal quality thresholds to trigger a handoff determination. If a handoff determination is triggered, the wireless unit can then send location information (which can be sent along with associated information) to the serving base station which can determine that a handoff is to be performed and provide the best candidate after examining the location information (which can be examined along with the associated information) relative to the handoff location information. The handoff determination or a portion thereof can be made at the serving base station, or at least a portion of the location information is forwarded to the MSC which determines whether the wireless unit is to be handed off and/or determines the best candidate after examining the location information and/or the associated information with reference to handoff location information corresponding to the location information of the wireless unit (and can further correspond to the associated information, such as signal quality measurements for that position).

In the embodiment of FIG. 8, the wireless unit uses the location information and handoff location information from the serving base station in determining that the wireless unit may need to be handed off. In determining that the wireless unit may need to be handed off, the wireless unit sends to the serving base station at least a portion of the location information for the MSC. At block 136, the MSC receives the location information and uses the location information (which can be received and used along with associated information) to determine that the wireless unit needs to be handed off and a best candidate to which the wireless unit is handed off. The MSC can determine which base station to handoff to by examining handoff location information for the serving base station or cell. The MSC can examine the capacity of the handoff candidates in determining which is the best candidate for the wireless unit in the particular position. Additionally, depending on the embodiment, the speed and/or direction of the wireless unit can be included in the location information and be used by the MSC in determining which is the best candidate to handoff the wireless unit at the particular position traveling at a particular speed and/or direction. For example, base station 60a can be chosen as the best candidate if the wireless unit is at a position in region 62 and proceeding In a direction towards the outer boundary of the serving cell, based on the received signal strength of a forward link channel from the base station 60a relative to other candidate base station(s) or relative to a level designated in the handoff location information, and/or based on the traffic load of the base station 60a relative to other candidate base station(s) or relative to a level designated in the handoff location information for the candidate base station 60a. The determination of the best candidate can be made by requesting a locate of the wireless unit from a candidate list associated with the particular location information or position contained in the handoff location information. Alternatively, the determination of the best candidate to handoff the wireless unit to can be performed at the serving base station and/or at the MSC.

After the best candidate for the wireless unit is determined at block 136, the MSC sends to the best candidate base station and the serving base station at block 138 the best candidate base station information, which includes the new channel(s) to be used between the best candidate base station and the wireless unit. At block 140, the serving base station informs the wireless unit of the new channel(s) for the best candidate base station, and the wireless unit tunes to the new channel(s) and is handed off to the best candidate base station.

In addition to the embodiment described above, alternative configurations of the handoff system according to the principles of the present invention are possible which omit and/or add components and/or use variations or portions of the described system. The manner of measuring, triggering, monitoring, transferring, storing and/or sending location information, associated information and/or handoff location information between and within the wireless communication systems depends on the particular application. For example, the location information, the associated information and/or handoff location information can be stored in a variety of manners and locations, and in being used by the handoff system, the manner in which the information is stored manipulated, augmented, updated and deployed within the wireless communications systems can also vary. Depending on the embodiment, components of the handoff system and the wireless communication system can be added, moved, changed or omitted. For example, the handoff system is described in a TDMA system, but the handoff system can be used with other wireless communications systems based on other radio protocols, such as CDMA, Global System Mobile (GSM), and/or Advanced Mobile Phone System (AMPS). The handoff system and portions thereof can be distributed at different locations throughout the wireless communication system, such as the wireless unit, the serving base station, the MSC and/or the candidate base stations.

As would be understood by one of ordinary skill in the art, different forms and kinds of location information and/or associated information can be used in the handoff process to link or associate a particular location information with a particular candidate base station(s) for handoff. Additionally, not all of the location, associated information and/or handoff location information stored in the wireless communications system needs to be used by the handoff system. Moreover, the location information and/or associated information can be modified or provided to the handoff system and/or the wireless communications system in different form so long as the location information and/or associated information is derived from the location information and/or the associated information for the wireless unit. Furthermore, the handoff can be implemented in different configurations and portions thereof can be implemented in application specific integrated circuits, software-driven processing circuitry, firmware or other arrangements of discrete components as would be understood by one of ordinary skill in the art with the benefit of this disclosure. What has been described is merely illustrative of the application of the principles of the present invention. Those skilled in the art will readily recognize that these and various other modifications, arrangements and methods can be made to the present invention without strictly following the exemplary applications illustrated and described herein and without departing from the spirit and scope of the present invention.

## Claims

1. A method of performing a handoff of a wireless unit (12) from a first base station (24a), said method CHARACTERIZED BY:
using location information for said wireless unit (12) to determine whether to handoff said wireless unit (12) to a second base station (24b).

2. The method of claim 1 CHARACTERIZED BY:
obtaining location information at said wireless unit.

3. The method of claim 2 CHARACTERIZED BY:
sending said location information to said first base station.

4. The method of claim 1 CHARACTERIZED BY:
performing at least one signal quality measurement associated with said location information.

5. The method of claim 2 CHARACTERIZED IN THAT obtaining includes:
using a GPS receiver (72) integrated with said wireless unit (70) to obtain said location information at said wireless unit (70).

6. The method of claim 1 CHARACTERIZED IN THAT said using including:
receiving said handoff location information from said first base station (24a);
examining said location information with reference to said handoff location information; and
transmitting at least a portion of said location information for said wireless unit (12) to said first base station (24a) based on said examining.

7. The method of claim 1 CHARACTERIZED BY
transmitting at least a portion of said location information for said wireless unit (12) to said fist base station (24a); and
examining handoff location information using said at least a portion of said location information to determine said second base station (24b) as said best candidate base station to hand off said wireless unit (12).

8. The method of claim 1 CHARACTERIZED BY:
examining said location information to obtain at least one candidate base station (24b-g); and
requesting a locate from said at least one candidate base station of said wireless unit to determine said second base station (24b) to handoff said wireless unit.

9. The method of claim 1 CHARACTERIZED BY said obtaining and using further including:
obtaining information associated with said location information; and
wherein said using further comprising using said location information and said associated information to determine whether to handoff said wireless unit to said second base station.

10. The method of claim 9 CHARACTERIZED IN THAT said obtaining and using further including:
obtaining at least one signal quality measurement of communications between said wireless unit (12) and said first basej station (24a) at a position in said location information as said associated information.

11. The method of claim 1 CHARACTERIZED IN THAT said using further including:
using said location information with speed of the wireless unit.

12. The method of claim 1 CHACTERIZED IN THAT including:
using said location information with direction of said wireless unit.

13. The method of claim 1 CHARACTERIZED IN THAT using comprises:
examining handoff location information relative to said location information.

14. The method of claim 13 CHARACTERIZED BY
receiving said location information from said wireless unit (12)

15. The method of claim 13 CHARACTERIZED IN THAT said step of examining comprises:
examining traffic load as at least a portion of said handoff location information.
